# EUROPÄISCHE PATENTSCHRIFT

(11) **EP 1 460 099 B1**
(45) Veröffentlichungstag und Bekanntmachung des Hinweises auf die Patenterteilung: **21.06.2006**
(21) Anmeldenummer: 04005391.0
(22) Anmeldetag: 06.03.2004
(51) Int. Cl.: C08G 77/38, C08G 77/08, C08G 77/46

(54) **Verfahren zur Umsetzung von Polyorganosiloxanen**
Process for modifying polysiloxanes
Procédé de modification de polysiloxanes

(30) Priorität: 21.03.2003 DE 10312636
(43) Veröffentlichungstag der Anmeldung: 22.09.2004
(73) Patentinhaber: Goldschmidt GmbH, 45127 Essen (DE)
(72) Erfinder: Hohenberg, Olaf, 45329 Marl (DE); Krohm, Hans-Günter, 46348 Raesfeld (DE); Neumann, Thomas, Dr., 44869 Bochum (DE); Reibold, Thomas, 45768 Marl (DE); Urban, Michael, 45327 Essen (DE); Wewers, Dietmar, Dr., 46242 Bottrop (DE)

(56) Entgegenhaltungen:
- EP-A- 0 475 439
- DE-C- 10 223 073
- US-A- 3 801 616
- US-A- 5 639 844
- US-A1- 2002 156 223
- US-A1- 2003 065 117
- US-B1- 6 359 097
- BLACKWELL JAMES M: "B(C6F5)3-catalyzed silylation of alcohols: a mild , general method for synthesis of silyl ethers" CAPLUS, 6. September 1999 (1999-09-06), XP002163708

## Beschreibung

Die Erfindung betrifft ein Verfahren zur Umsetzung von Polyorganosiloxanen, bei dem ein an das Silicium gebundenes Wasserstoffatom durch einen Alkoholatrest ersetzt wird.

Polyorganosiloxane werden nach dem Stand der Technik industriell über die sogenannte Chlorsiloxanroute hergestellt. In der Chlorsiloxanroute werden am Silicium chlorsubstituierte Polyorganosiloxane mit Alkoholen unter Bildung von Alkoxysubstituierten Polyorganosiloxanen umgesetzt. Dieses Verfahren führt zwangsläufig zu erheblichen Mengen an Salzsäureabfällen, die ökologische Probleme sowie bei der Abtrennung erhebliche Kosten verursachen.

EP-A-0 475 439 beschreibt die Umsetzung von Organowasserstoff-Polysiloxanen mit höheren aliphatischen Alkoholen in Gegenwart eines Katalysators aus eines Platinverbindung und einer organischen Säure.

V. Gevorgyan et al. beschreiben den Einsatz von B(C₆F₅)₃-Katalysatoren in der Hydrosilylierung von Olefinen (V. Gevorgyan, J. Org. Chem., 67 (6), 1936-1940, 2002). B(C₆F₅)₃ wurde auch als Katalysator für die Reduktion von Alkoholen mit monomeren Hydrosilanen beschrieben (V. Gevorgyan, J. Org. Chem., 65, 6179-6186, 2000). Lewissäure-aktive trivalente Borverbindungen besitzen bekanntermaßen eine hohe Oxophilie, insbesondere Borhalogen- und Boralkylverbindungen. Sie koordinieren mit sauerstoffhaltigen Lewisbasen gewöhnlich unter Bildung stabiler Komplexe. Bortrifluorid beispielsweise bildet Addukte mit einer großen Anzahl von Elektronendonatoren wie Ether, Alkoholen, Ketonen, Aminen, Phosphinen, Arsinen, Thiolen oder Seleniden. Die Koordination mit sauerstoffhaltigen Lewisbasen geht zum Teil soweit, dass sie zu Desoxygenierungen führen. Unter einer Desoxygenierung versteht man dabei eine Reduktion durch Extrusion eines Sauerstoffatoms - beispielsweise unter Bildung fester B-O-Bindungen. Durch eine solche Desoxygenierung kann beispielsweise eine reduktive Spaltung von Ethern oder Alkoholen herbeigeführt werden. Gevorgyan et al. betonen in diesem Zusammenhang auch das deoxygenative Verhalten trivalenter Borverbindungen in Gegenwart von Silanen. B(C₆F₅)₃ wurde darüber hinaus als Katalysator für die Silylierung von Alkoholen mit monomeren Hydrosilanen, insbesondere für die Schutzgruppenchemie eingesetzt (W.E. Piers, J. Org. Chem. 64, 4887-4892, 1999). Diese Reaktionen werden auch als dehydrogenative Hydrosilylierung bezeichnet. Ihnen ist gemein, dass sie monomere Silane, die eine Si-H-Bindung aufweisen, jedoch keine Si-O-Bindung, mit Alkoholen unter Freisetzung von molekularem Wasserstoff und Bildung eines Silyl-geschützten Alkohols (R₃Si-O-C) umsetzen. Zudem beschreiben Piers et al., dass die im Lösungsmittel hergestellten Umsetzungsprodukte aus monomerem Wasserstoffsilan und Alkohol einer Aufarbeitung durch säulenchromatographische Reinigung und/oder Umkristallisation bedürfen.

WO-A-01/74938 betrifft die Kupplung von H-Siloxanen mit OH-Siloxanen zur Bildung höherer molekularer Siloxane sowie zur Vernetzung von Siliconen in einer katalysierten dehydrogenativen Kondensation. Als Katalysatoren werden eine Reihe von Fluor-haltigen Organoborverbindungen vorgeschlagen. Das Verfahren zeichnet sich dadurch aus, dass unter Freisetzung von molekularem Wasserstoff Si-O-Si-Bindungen geknüpft werden.

Aufgabe der vorliegenden Erfindung war demnach primär, ein Verfahren zur Herstellung von substituierten Polyorganosiloxanen bereitzustellen, mit dem unter Vermeidung der Nachteile des Standes der Technik chlorfrei und ggf. lösungsmittelfrei Si-O-C-Bindungen zwischen end- und/oder seitenständigen Wasserstoff-Poly- und/oder Oligosiloxanen und Organyloxygruppen geknüpft werden können.

Die Aufgabe wird erfindungsgemäß in einer ersten Ausführungsform gelöst durch ein Verfahren zur Umsetzung von -Si(H)-Einheiten enthaltenden Polyorganosiloxanen der allgemeinen Formel (I) 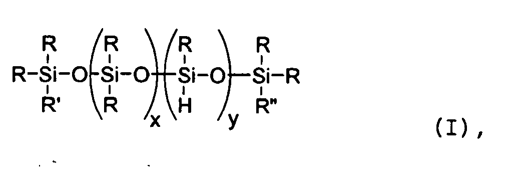 in denen mindestens ein Wasserstoffatom an ein Siliciumatom gebunden ist;
- R: einen oder mehrere gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen, darstellt;
- R' und R": unabhängig voneinander H oder R darstellt;
- x: eine ganze Zahl von 0 bis 300 und
- y: unabhängig davon eine ganze Zahl von 0 bis 100 darstellt;
mit wenigstens einem Alkohol, der ausgewählt ist aus der Gruppe der linearen oder verzweigten, gesättigten, ein- oder mehrfach ungesättigten, aromatischen, aliphatisch-aromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen sowie deren Gemischen, dadurch gekennzeichnet, dass man in einem Verfahrensschritt unter Einsatz einer oder mehrerer Elementverbindungen der III. Haupt- und/oder der 3. Nebengruppe als Katalysator in den Si(H)(R)-O-Einheiten des Polyorganosiloxans vorhandene Wasserstoffatome teilweise oder vollständig durch Akoholatreste der eingesetzten Alkohole ersetzt.

Vor dem Hintergrund der hohen Oxophilie beispielsweise trivalenter Borverbindungen ist in hohem Maße überraschend, dass im erfindungsgemäßen Verfahren die Siloxan-Gerüststruktur im Wesentlichen intakt bleibt. Ein nach dem Stand der Technik zu erwartender Angriff beispielsweise von lewissauren trivalenten Borverbindungen auf die Si-O-Si-Struktureinheit des Siloxangerüsts würde zwangsläufig zu einer merklichen Kettenverkürzung führen, was erfindungsgemäß jedoch nicht beobachtet wird. Ebenso wäre zu erwarten gewesen, dass die verwendeten Polyetheralkohole und Alkohole aufgrund der ausgeprägten Oxophilie der Borverbindungen deoxygeniert würden. Auch dies tritt erfindungsgemäß überraschend nicht ein.

Des Weiteren konnte überraschend gefunden werden, dass mit dem erfindungsgemäßen Verfahren Polyorgano-Wasserstoffsiloxane der allgemeinen Formel (I) lösungsmittelfrei und ohne weitere Aufarbeitungsschritte zu an sich bekannten und neuen substituierten Polyorganosiloxanen umgesetzt werden können. Ein Verzicht auf Lösungsmittel und Aufarbeitungsschritte ist wirtschaftlich und ökologisch vorteilhaft. Beim erfindungsgemäßen Verfahren dient eine abschließende Filtration lediglich einer Entfernung grober Feststoffpartikel aus dem sonst klaren Reaktionsprodukt und stellt somit keinen Aufarbeitungsschritt im Sinne des Standes der Technik dar.

Ein weiterer Vorteil des erfindungsgemäßen Verfahrens besteht darin, dass auch Polyorganosiloxane eingesetzt werden können, die aufgrund der Äquilibriermethode durch saure Verbindungen trotz einer Neutralisation noch Restsäurespuren enthalten können. Das erfindungsgemäße Verfahren lässt darüber hinaus auch den Einsatz von Siloxanen zu, die nicht neutralisiert wurden, was weitere Vorteile in Bezug auf Verfahrensvereinfachung bringt.

Die Anwesenheit von Säurespuren in Siloxanen - im Gegensatz zu Silanen -, die auf die Äquilibriermethode zurückgeht, führt bei Anwesenheit lewissaurer Verbindungen wie beispielsweise dreiwertiger Borverbindungen, zu Supersäuren. Diese zu erwartenden Supersäuren bewirken nach dem Stand der Technik unerwünschte Reäquilibrierungen der Siloxane. Solche Requilibrierungen werden beim erfindungsgemäßen Verfahren jedoch nicht beobachtet.

Hervorzuheben ist, dass bei Einsatz ungesättigter Alkohole keine Reaktion der Si(H)-Funktion an der Doppelbindung stattfindet. Auf diese Weise können ungesättigte Si-O-C-verknüpfte Reaktionsprodukte hergestellt werden.

Als wirksame Katalysatoren im Sinne der vorliegenden Erfindung sind unter den lewissauren Elementverbindungen der III. Hauptgruppe insbesondere borhaltige und/oder aluminiumhaltige Elementverbindung bevorzugt. Von den lewissauren Elementverbindungen der 3. Nebengruppe sind insbesondere scandiumhaltige, yttriumhaltige, lanthanhaltige und/oder lanthanoidhaltige Lewissäuren bevorzugt. Erfindungsgemäß werden die Elementverbindungen der III. Haupt- und/oder 3. Nebengruppe besonders bevorzugt als Halogenide, Alkylverbindungen, fluorhaltige, cycloaliphatische und/oder heterocyclische Verbindungen eingesetzt.

Eine bevorzugte Ausführungsform der Erfindung sieht vor, dass fluorierte und/oder nicht fluorierte Organoborverbindungen eingesetzt werden, insbesondere solche, die ausgewählt sind aus:
(C₅F₄)(C₆F₅)₂B; (C₅F₄)₃B(C₆F₅)BF₂; BF(C₆F₅)₂; B(C₆F₅)₃; BCl₂(C₆F₅); BCl(C₆F₅)₂;B(C₆H₅)(C₆F₅)₂; B(Ph)₂(C₆F₅); [C₆H₄(mCF₃)]₃B; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 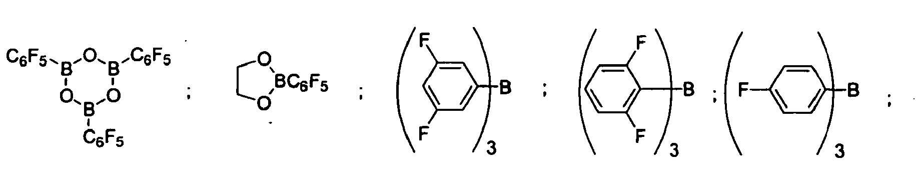 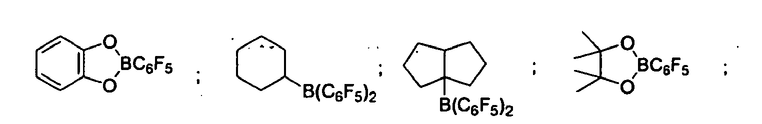 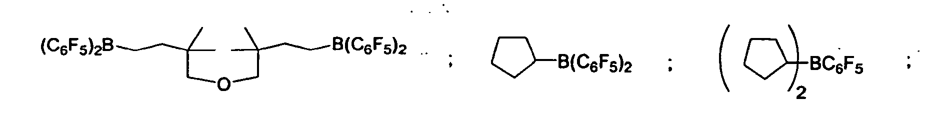 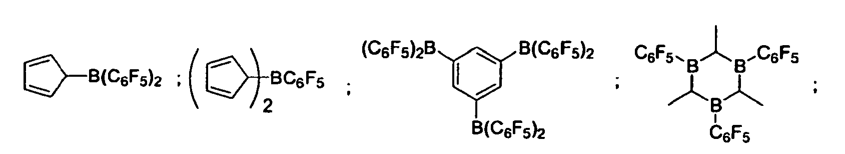 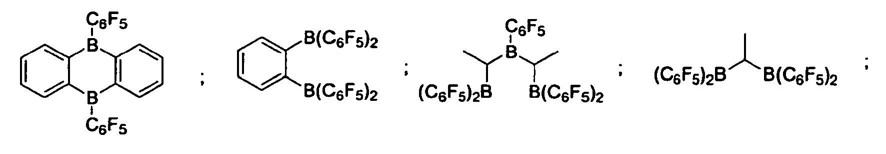 insbesondere Tris (Perfluortriphenylboran) [1109-15-5], Bortrifluorid-Etherat [109-63-7], Boran-Triphenylphosphinkomplex [2049-55-0], Triphenylboran [960-71-4], Triethylboran [97-94-9] und Bortrichlorid [10294-34-5], Tris(pentafluorophenyl)-Boroxin (9Cl) [223440-98-0], 4,4,5,5,-Tetramethyl-2-(pentafluorophenyl)-1,3,2-Dioxaborolan (9Cl) [325142-81-2], 2-(Pentafluorophenyl)-1,3,2-Dioxaborolan (9Cl) [336880-93-4], Bis(pentafluorophenyl)cyclohexylboran [245043-30-5], Di-2,4-cyclopentadien-1-yl(pentafluorophenyl)-Boran (9Cl) [336881-03-9], (Hexahydro-3a(1H)-pentalenyl) bis(pentafluorophenyl) boran (9Cl) [336880-98-9], 1,3-[2-[Bis(pentafluorophenyl)boryl]ethyl]tetramethyldisiloxan [336880-99-0], 2,4,6-Tris(pentafluorophenyl)borazin (7Cl, 8Cl, 9Cl) [1110-39-0], 1,2-Dihydro-2-(pentafluorophenyl)-1,2-azaborin (9Cl) [336880-94-5], 2-(Pentafluorophenyl)-1,3,2-benzodioxaborol (9Cl) [336880-96-7], Tris(4-trifluoromethoxyphenyl)boran [336880-95-6], Tris(3-trifluoromethylphenyl)boran [24455-00-3], Tris(4-fluorophenyl)boran [47196-74-7], Tris(2,6-difluorophenyl)boran [146355-09-1], Tris(3,5-difluorophenyl)boran [154735-09-8], Methyliumtriphenyltetrakis(pentafluorophenyl)borat [136040-19-2], N,N-Dimethylaniliniumtetrakis(pentyfluorophenyl)borat sowie Gemische der vorstehenden Katalysatoren.

Eine weitere bevorzugte Ausführungsform der Erfindung sieht vor, dass fluorierte und/oder nicht fluorierte Organoaluminiumverbindungen eingesetzt werden, insbesondere solche, die ausgewählt sind aus:
AlCl₃ [7446-70-0], Aliuminiumacetylacetonat [13963-57-0], AlF₃ [7784-18-1], Aluminiumtrifluormethansulfonat [74974-61-1], Dii-Butylaluminiumchlorid [1779-25-5], Di-i-Butylaluminiumhydrid [1191-15-7], Triethylaluminium [97-93-8] sowie deren Gemische.

Eine weitere bevorzugte Ausführungsform der Erfindung sieht vor, dass fluorierte und/oder nicht fluorierte Organoscandiumverbindungen eingesetzt werden, insbesondere solche, die ausgewählt sind aus:
Scandium(III)chlorid [10361-84-9], Scandium(III)fluorid [13709-47-2], Scandium(III)hexafluoroacetylacetonat [18990-42-6], Scandium(III)trifluormethansulfonat [144026-79-9], Tris (cyclopentadienyl)scandium [1298-54-0] sowie deren Gemische.

Eine weitere bevorzugte Ausführungsform der Erfindung sieht vor, dass fluorierte und/oder nicht fluorierte Organoyttriumverbindungen eingesetzt werden, insbesondere solche, die ausgewählt sind aus:
Tris(cyclopentadienyl)yttrium [1294-07-1], Yttrium(III)chlorid [10361-92-9], Yttrium(III)fluorid [13709-49-4], Yttrium(III)hexafluoroacetylacetonat [18911-76-7], Yttrium(III)naphthenat [61790-20-3] sowie deren Gemische.

Eine weitere bevorzugte Ausführungsform der Erfindung sieht vor, dass fluorierte und/oder nicht fluorierte Organolanthanverbindungen eingesetzt werden, insbesondere solche, die ausgewählt sind aus:
Lanthan(III)chlorid [10099-58-8], Lanthan(III)fluorid [13709-38-1], Lanthan(III)iodid [13813-22-4], Lanthan (III) trifluormethansulfonat [52093-26-2], Tris (cyclopentadienyl) lanthan [1272-23-7] sowie deren Gemischte.

Eine weitere bevorzugte Ausführungsform der Erfindung sieht vor, dass fluorierte und/oder nicht fluorierte Organolanthanoidverbindungen eingesetzt werden, insbesondere solche, die ausgewählt sind aus:
Cer(III)bromid [14457-87-5], Cer(III)chlorid [7790-86-5], Cer(III)fluorid [7758-88-5], Cer(IV)fluorid [60627-09-0], Cer(III)trifluoracetylacetonat [18078-37-0], Tris(cyclopentadienyl)cer [1298-53-9], Europium(III)fluorid [13765-25-8], Europium(II)chlorid [13769-20-5], Praesodym(III)hexafluoroacetylacetonat [47814-20-0], Praesodym(III)fluorid [13709-46-1], Praesodym(III)trifluoracetylacetonat [59991-56-9], Samarium(III)chlorid [10361-82-7], Samarium(III)fluorid [13765-24-7], Samarium(III)naphthenat [61790-20-3], Samarium(III)trifluoracetylacetonat [23301-82-8], Ytterbium(III)fluorid [13760-80-8], Ytterbium (III) trifluormethansulfonat [54761-04-5], Tris(cyclopentadienyl)ytterbium [1295-20-1] sowie deren Gemische.

Dabei kann der Katalysator homogen oder als heterogener Katalysator eingesetzt werden. Ebenso ist eine Ausgestaltung als homogenisierte heterogene bzw. heterogenisierte homogene Katalyse im Sinne der Erfindung möglich.

Im erfindungsgemäßen Verfahren kann grundsätzlich jede alkoholische Hydroxylgruppen aufweisende organische Verbindung eingesetzt werden, einschließlich der Monoalkohole, Diole, Triole, Polyole, Aminoalkohole, fluorierten Alkohole und beliebigen anderen substituierten Alkohole und beispielsweise Hydroxycarbonsäuren und deren jeweiligen Derivate. Besonders bevorzugt sind Ethanol sowie Propylenoxid- bzw. Ethylenoxid-funktionalisierte Polyetheralkohole, die beispielsweise mit Butylalkohol, Allylalkohol oder Nonylphenol gestartet wurden sowie styroloxidhaltige und/oder butylenoxidhaltige Polyetheralkohole. Ferner sind Aminoalkohole besonders bevorzugt. Ein Vorteil dieser Alkohole ist, dass mit ihnen eine besonders wirtschaftliche Verfahrensweise möglich ist.

Der Alkohol wird vorzugsweise äquimolar oder im Überschuss eingesetzt; besonders bevorzugt stellt man beim erfindungsgemäßen Verfahren das Stoffmengen-Verhältnis von SiH-Gruppen zu Alkoholgruppen im Bereich von 1 : 1,0 bis zu 1 : 3,0 Moläquivalenten ein.

Ohne weiteres lassen sich nach dem erfindungsgemäßen Verfahren auch teilsubstituierte Polyorganosiloxane herstellen, die neben den substituierten Si-O-C-Einheiten noch nicht umgesetzte Si(H)- aufweisen. Dazu wird das Stoffmengen-Verhältnis von SiH-Gruppen zu Alkoholgruppen vorzugsweise im Bereich von 1 : 0,1 bis zu 1 : 0,99 Moläquivalenten eingestellt.
Durch eine derartige Umsetzung in einem unterstöchiometrischen Verhältnis bleibt ein Rest an nicht umgesetzter Si-H-Funktion erhalten, der in einem darauffolgenden Schritt beispielsweise in einer Hydrosilylierungsreaktion, bei der eine Silicium-Kohlenstoff-Bindung gebildet wird, umgesetzt werden kann, um gemischte Produkte herzustellen. In ähnlicher Weise kann man auch Polyethersiloxane mit endständigen OH-Funktionen über eine deyhydrogenative Kupplung an das Siloxan-Grundgerüst anlagern.

Um die Nebenreaktion von Si-H zu Si-OH zu unterbinden, ist es vorteilhaft, die eingesetzten Alkohole, insbesondere beim Einsatz von Polyetheralkoholen, vor dem Einsatz zu trocknen. Dies kann beispielsweise durch Vakuumdestillation erfolgen. Die dehydrogenative Kupplung kann durch die Einstellung eines schwach sauren Mediums begünstigt werden. Um den umzusetzenden Alkohol schwach sauer einzustellen, kann man vor, während oder nach der Destillation beispielsweise Diammoniumphosphat (DAP; 100 bis 500 ppm) zusetzen.

Es hat sich zudem gezeigt, dass das erfindungsgemäße Verfahren in gleicher Weise in neutralen oder alkalischen Medien durchgeführt werden kann. Beispielsweise konnten alkalisch hergestellte Polyether ohne anschließende Neutralisation erfolgreich im erfindungsgemäßen Verfahren eingesetzt werden.

Im erfindungsgemäßen Verfahren eingesetzte Polyorganosiloxane können rein endständig, d. h. Si-H-Gruppen befinden sich lediglich an den Kopfgruppen der Polysiloxankette, rein seitenständig, d. h. Si-H-Gruppen finden sich lediglich im Innern, nicht jedoch an den Kopfgruppen der Polysiloxankette, oder gemischtständig sein.

In gleicher Weise und ganz besonders bevorzugt können im erfindungsgemäßen Verfahren kammartige, α,ω-disubstituierte und gemischte Polydimethyl-Wasserstoffsiloxane der allgemeinen Formel (I) eingesetzt werden.

Ganz besonders bevorzugt ist beispielsweise der Einsatz von Polyorganosiloxanen der nachstehenden Formel (II):

M-O-Dₓ-D'_{y}-M (II)

wobei
- M: für Trialkylsilyl, insbesondere Trimethylsilyl steht,
- Dₓ: für (Dialkylsilyloxy)ₓ, insbesondere (Dimethylsilyldxy)ₓ steht und
- D'_{y}: für 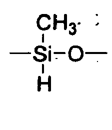 steht, wobei y eine ganze Zahl bis 100 darstellt.

Ebenso ganz besonders bevorzugt ist beispielsweise der Einsatz von Polyorganosiloxanen der nachstehenden Formel (III):

M'-O-Dₓ-M' (III)

wobei
- M': für Dialkyl(hydrogen)silyl, insbesondere Dimethylhydrogensilyl steht und
- Dₓ: für (Dialkylsilyloxy)ₓ, insbesondere (Dimethylsilyloxy)ₓ
steht.

Ebenso ganz besonders bevorzugt ist beispielsweise der Einsatz von Polyorganosiloxanen der nachstehenden Formel (IV)

M'-O-Dₓ-D'_{y}-M' (IV)

wobei
- M': für Dialkyl(hydrogen)silyl, insbesondere Dimethylhydrogensilyl steht,
- Dₓ: für (Dialkylsilyloxy)ₓ, insbesondere (Dimethylsilyloxy)ₓ steht und
- D'_{y}: für 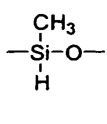 steht.

Das erfindungsgemäße Verfahren kann lösungsmittelfrei durchgeführt werden, was insbesondere für die großtechnische Realisierung unter wirtschaftlichen und ökologischen Aspekten einen erheblichen Vorteil gegenüber dem Verfahren des Standes der Technik darstellt.

Im Gegensatz zum Verfahren nach dem Stand der Technik sind erfindungsgemäß Polyorganosiloxane herstellbar, die mit Organyloxy-Gruppen und/oder Amino-Organyloxy-Gruppen substituiert wurden und nicht mit aus der Substitutionsreaktion stammender Salzsäure, Chlorwasserstoff bzw. deren Neutralisationsprodukten entsprechenden Chloriden verunreinigt sind. Dies erleichtert eine Weiterverarbeitung bzw. Aufarbeitung erheblich. Beispielsweise entfällt eine aufwendige Abfiltration des chloridhaltigen Neutralisationsproduktes, beispielsweise in Form von Ammoniumchlorid. Zudem entsteht neben der Vermeidung von Neutralisationsprodukten im vorgenannten Sinne und der Vermeidung von Filterhilfe kein Produktverlust durch am Salz eventuell auch an der Filtrierhilfe anhaftendes Produkt.

Mit dem erfindungsgemäßen Verfahren ist daher ein Weg gefunden worden, Polyorganosiloxane, enthaltend endständige und/oder seitenständige Si-O-C-verknüpfte einheitliche oder gemischte Reste, ausgewählt aus linearen oder verzweigten, gesättigten, ein- oder mehrfach ungesättigten, aromatischen, aliphatisch-aromatischen Mono- oder Polyalkoholen, Polyethern, Polyetheralkoholen oder Aminoalkoholen, insbesondere N-Alkyl-, Arylamino-EO-, -PO-Alkoholen, N-Alkyl- oder Arylaminoalkoholen oder Gemischen davon herzustellen, die frei sind von den genannten Verunreinigungen, insbesondere Restbestandteilen an Salzsäure und Neutralisationsprodukten, die Chlorid enthalten.

Dabei sind solche Polyorganosiloxane besonders bevorzugt, in denen die Reste ausgewählt sind aus einfachen Alkoholen wie Methanol, Ethanol, 1H, 1H-pentadecafluoro-1-octanol etc. und Butylpolyether Allylpolyether, Nonylphenolpolyether, Methylpolyether und/oder Aminopolyether.

### Ausführungsbeispiele:

### Allgemeines:

### Siloxane:

Bei den Siloxanen handelte es sich im Allgemeinen um rein endständige Siloxane (beispielsweise: M'-O-D₁₃-M') oder um rein seitenständige Siloxane (beispielsweise: M-O-D'₅-D₂₂-M).

### Alkohole:

Die Polyetheralkohole wurden vor dem Einsatz durch eine Destillation im Vakuum von Restwasserspuren befreit. Vor der Destillation wurde optional Diammoniumphosphat (DAP; 350 ppm) zugesetzt.

### Borhaltiger Katalysator:

Der Katalysator wurde wie kommerziell erhältlich, d.h. ohne weitere Behandlung und Aufreinigung, eingesetzt.

### Reaktionsführung:

Alle Reaktionen wurden unter Schutzgas ausgeführt. Bei der Reaktion entstand Wasserstoff, der über einen Blasenzähler abgeleitet wurde. Es wurden drei Arten der Reaktionsführung unterschieden.

### Reaktionsführung (A):

Vorlage Polyether/Alkohol, Aufheizen auf Reaktionstemperatur, Zugabe Katalysator und anschließendes Zutropfen des Siloxans unter Temperaturkontrolle;

### Reaktionsführung (B):

Vorlage Siloxan, Aufheizen auf Reaktionstemperatur, Zugabe Katalysator und anschließendes Zutropfen des Polyethers unter Temperaturkontrolle;

### Reaktionsführung (C):

Vorlage Siloxan und Polyether, Aufheizen auf Reaktionstemperatur, Zugabe des Katalysators und Durchführung der Reaktion;

### Aufarbeitung:

Falls nicht anders beschrieben, wählte man folgende Standardaufarbeitung:

Die Reaktionsmischung wurde durch Zugabe eines Amins zur Filtration vorbereitet. Anschließend filtrierte man über Tiefenfilter gegebenenfalls mit leichtem Überdruck. Zur Filtration wurde eine Tiefenfilter-Schicht zur Fest/Flüssigtrennung im Bereich der Feinklär- oder Grobfiltration verwendet. Hauptbestandteile dieser Filterschicht waren Zellstoffe, natürliche Diatomeenerde und Perlite. Die verwendete Filterschicht hatte einen Wasserdurchfluss von ca. 275 l/m² min (bei 100 kPa), eine flächenbezogene Masse von ca. 1.240 g/m² und eine Dicke von ca. 3,7 mm.

### Analysen:

Der Umsatz wurde durch die Bestimmung der Rest SiH-Funktionen mittels einer gasvolumetrischen Wasserstoffbestimmung [Umsatzangabe in %; SiH-Wert in val/kg Prüfsubstanz] ermittelt. Die Iodzahl, Verbrauch an Iod durch die Reaktion mit einer Doppelbindung, wurde zur Bestimmung der Doppelbindungsvalenzen herangezogen [Iodzahl angegeben in g I₂/100g Prüfsubstanz]. Die OH-Zahl wurde durch die Reaktion von Phthalsäureanydrid mit freien Hydroxygruppen ermittelt. Die freie Säure wurde mit einer Basenlösung zurücktitriert [OH-Zahl angegeben in mg KOH/g Prüfsubstanz]. Die Viskosität wurde in einem Kugelfallviskosimeter bestimmt.

Im Folgenden sind zunächst Umsetzungen der endständigen Wasserstoffsiloxane und dann die Reaktion eines seitenständigen Siloxans beschrieben.

Umsetzungen endständiger Wasserstoffsiloxane in einer dehydrogenativen Hydrosilylierung:

### Beispiel 1:

Umsetzung von M'-O-D₁₃-M'-Siloxan mit einem Butylpolyether unter Verwendung von Tris(Perfluortriphenylboran):

Umgesetzt wurden 104,4 g M'-O-D₁₃-M'-Siloxan (SiH-Wert 1,82 val/kg) mit 400 g eines mit Butylalkohol gestarteten, rein PO-haltigen Polyethers (mittlere Molmasse von 1.900 g/Mol) mit einer OH-Zahl von 29,3. Der Polyether wurde mit 10 Massen-% Überschuss eingesetzt, und zur Trocknung mit 0,14 g DAP konditioniert. Nach Reaktionsführung (C) gab man bei 90 °C 0,51 g Tris(Perfluortriphenylboran), entsprechend 0,5 Mol-% bezogen auf den SiH-Wert, zu. Die Reaktionstemperatur stieg kurzzeitig auf 102 °C an. Nach 25 min lag der Umsatz, entsprechend der SiH-Wert-Methode bei 100 %. Vor der Filtration über das Tiefenfilter gab man je 1 g N-Methylmorpholin zu.

Das Filtrat hatte einen SiH-Wert von 0, eine Viskosität von 374 mm²*s⁻¹.

### Beispiel 2:

Umsetzung von M'-O-D₁₃-M'-Siloxan mit Ethanol unter Verwendung von Tris(Perfluortriphenylboran):

Umgesetzt wurden 408 g eines mit Phosphazen equilibrierten, unneutralisierten M'-O-D₁₃-M'-Siloxans (SiH-Wert 1,78 val/kg) mit 92 g Ethanol (100 %ig). Der Ethanol wurde mit 178 Massen-% Überschuss eingesetzt. Nach Reaktionsführung (A) legte man 0,59 g Tris(Perfluortriphenylboran) (entsprechend 0,15 Mol-% bezogen auf den SiH-Wert) vor, und tropfte bei Rückflusstemperatur das Siloxan über einen Zeitraum von 2 h zu. Nach beendeter Siloxanzugabe lag der Umsatz, entsprechend der SiH-Wert Methode bei 82 %. Durch weiteres Kochen am Rückfluss bekam man nach weiteren 1,5 h eine klare Lösung, deren SiH-Wert 0 war, entsprechend einem Umsatz von 100 %.

Alle flüchtigen Bestandteile wurden im Vakuum bei 100 °C entfernt. Man erhielt nach einer anschließenden Filtration eine klare Produktlösung.

### Beispiel 3:

Umsetzung von M'-O-D₁₃-M'-Siloxan mit einem Butylpolyether unter Verwendung eines Gemisches aus Tris(Perfluortriphenylboran) und Triphenylboran:

Umgesetzt wurden 80 g M'-O-D₁₃-M'-Siloxan (SiH-Wert 1,77 val/kg) mit 300 g eines mit Butylalkohol gestarteten, rein PO-haltigen Polyethers (mittlere Molmasse von 1.900 g/Mol) mit einer OH-Zahl von 29,3. Der Polyether wurde mit 10 Massen-% Überschuss eingesetzt, und zur Trocknung mit 0,105 g DAP konditioniert. Nach Reaktionsführung (A) setzte man bei 90 °C ein Gemisch, (vorgelöst in dem Produkt aus Versuch 1) bestehend aus 0,076 g Tris(Perfluortriphenylboran) und 0,017 g Triphenylboran ein, entsprechend 0,157 Mol-% Bor bezogen auf den SiH-Wert, zu. Das Siloxan wurde bei 90 °C innerhalb von 30 min zugetropft, wobei die Reaktionstemperatur maximal auf 95 °C anstieg. Nach beendeter Siloxanzugabe lag der Umsatz, entsprechend der SiH-Wert-Methode bei 100 %. Vor der Filtration über das Tiefenfilter gab man je 0,75 g N-Methylmorpholin zu.

Das Filtrat hatte einen SiH-Wert von 0, eine Viskosität von 379 mm²*s-1.

### Beispiel 4:

Umsetzung von M'-O-D₁₃-M'-Siloxan mit einem Butylpolyether unter Verwendung eines Gemisches aus Tris(Perfluortriphenylboran) und Bortrifluoridetherat:

Umgesetzt wurden 80 g M'-O-D₁₃-M'-Siloxan (SiH-Wert 1,77 val/kg) mit 300 g eines mit Butylalkohol gestarteten, rein PO-haltigen Polyethers (mittlere Molmasse von 1.900 g/Mol) mit einer OH-Zahl von 29,3. Der Polyether wurde mit 10 Massen-% Überschuss eingesetzt, und zur Trocknung mit 0,105 g DAP konditioniert. Nach Reaktionsführung (A) setzte man bei 90 °C ein Gemisch, (vorgelöst in dem Produkt aus Versuch 1) bestehend aus 0,0534 g Tris(Perfluortriphenylboran) und 0,0073 g Bortrifluoridetherat ein, entsprechend 0,11 Mol-% Bor bezogen auf den SiH-Wert, zu. Das Siloxan wurde bei 90 °C innerhalb von 30 min zugetropft, wobei die Reaktionstemperatur maximal auf 95 °C ansteigt. Nach beendeter Siloxanzugabe lag der Umsatz, entsprechend der SiH-Wert-Methode bei 100 %. Vor der Filtration über das Tiefenfilter gab man je 0,75 g N-Methylmorpholin zu.

Das Filtrat hatte einen SiH-Wert von 0, eine Viskosität von 398 mm²*s-1.

Umsetzungen seitenständiger Wasserstoffsiloxane in einer dehydrogenativen Hydrosilylierung:

### Beispiel 5:

Umsetzung von M-O-D'₅-D₂₂-M-Siloxan mit einem Allylpolyether unter Verwendung von Tris(Perfluortriphenylboran):

Umgesetzt wurden 100 g M-O-D'₅-D₂₂-M-Siloxan (SiH-Wert 2,54 val/kg) mit 276,1 g eines mit Allylalkohol gestarteten, gemischt EO-/PO-haltigen Polyethers (mittlere Molmasse von 600 g/Mol; PO-Anteil beträgt 26 Mol-%) mit einer Iod-Zahl von 30,4. Der Polyether wurde mit 30 Massen-% Überschuss eingesetzt. Nach Reaktionsführung (C) gab man bei 90 °C 0,68 g Tris(Perfluortriphenylboran), entsprechend 0,5 Mol-% bezogen auf den SiH-Wert, zu. Nach 240 min lag der Umsatz, entsprechend der SiH-Wert Methode bei 100 %. Das Reaktionsprodukt wurde über das Tiefenfilter filtriert.

Das Filtrat hatte einen SiH-Wert von 0, eine OH-Zahl von 26,7 (entsprechend dem nicht abreagierten Überschuss an Polyether), eine Iod-Zahl von 22,4 (theoretische Iod-Zahl 22,3 entsprechend vollständig vorhandener Doppelbindungen) und eine Viskosität von 275 mPas.

### Beispiel 6:

Umsetzung von M'-O-D13-M'-Siloxan mit einem Butylpolyether unter Verwendung von Scandium(III)Triflat:

Umgesetzt wurden 80 g M'-O-D13-M'-Siloxan (SiH-Wert 1,77 val/kg) mit 300 g eines mit Butylalkohol gestarteten, rein PO-haltigen Polyethers (mittlere Molmasse von 1.900 g/Mol) mit einer OH-Zahl von 29,3. Der Polyether wurde mit 10 Massen-% Überschuss eingesetzt. Nach Reaktionsführung (A) setzte man bei 90 °C 0,1 g Scandium(III)Triflat ein, entsprechend 0,15 Möl-% Scandium bezogen auf den SiH-Wert, zu. Das Siloxan wurde bei 90 °C innerhalb von 30 min zugetropft, wobei die Reaktionstemperatur maximal auf 95 °C anstieg. Nach beendeter Siloxanzugabe lag der Umsatz, entsprechend der SiH-Wert-Methode bei 100 %. Vor Filtration über das Tiefenfilter gab man 1 g N-Methylmorpholin zu.

### Beispiel 7:

Umsetzung von M'-O-D13-M'-Siloxan mit einem Butylpolyether unter Verwendung von Scandium(III)Triflat und Tris(perfluortriphenylboran):

Umgesetzt wurden 80 g M'-O-D13-M'-Siloxan (SiH-Wert 1,77 val/kg) mit 300 g eines mit Butylalkohol gestarteten, rein PO-haltigen Polyethers (mittlere Molmasse von 1.900 g/Mol) mit einer OH-Zahl von 29,3. Der Polyether wurde mit 10 Massen-%Überschuss eingesetzt. Nach Reaktionsführung (A) setzte man bei 90 °C 0,05 g Scandium(III)Triflat und 0,05 g Tris (Perfluortriphenylboran) ein, entsprechend 0,075 Mol-% Scandium und 0,075 Mol-% Bor bezogen auf den SiH-Wert, zu. Das Siloxan wurde bei 90 °C innerhalb von 30 min zugetropft, wobei die Reaktionstemperatur maximal auf 95 °C ansteigt. Nach beendeter Siloxanzugabe lag der Umsatz, entsprechend der SiH-Wert-Methode bei 100 %. Vor Filtration über das Tiefenfilter gab man 1 g N-Methylmorpholin zu.

Umsetzung von fluorierten Alkoholen mit SiH-Polysiloxanen:

### Beispiel 8:

Umsetzung von Fluowet EA 600 (Firma Clariant) mit dem mittelständigen Si-H-funktionellen Polysiloxan (D = 9,3, D' = 8,7) unter Verwendung eines Bor-haltigen Katalysators:

72,8 g Fluowet EA 600 werden in einem Vierhalskolben, ausgestattet mit Rührer, Intensivkühler, Thermometer und Tropftrichter, zusammen mit 0,1024 g Tris(pentafluortriphenyl)boran als Katalysator und 21 g Toluol in inerter Atmosphäre auf 90 °C aufgeheizt. Bei Erreichen der Temperatur werden 32,15 g mittelständiges Si-H-funktionalisiertes Polysiloxan (D = 9,3, D'= 8,7) der allgemeinen Formel Me₃SiO(SiMe₂O)_{9.3}(SiMeHO)_{8.7}SiMe₃ (SiH-Wert: 0,627 %) innerhalb von 15 min zugetropft. Nach beendeter Zugabe und Abkühlen lag der Umsatz, entsprechend der SiH-Methode bei 100 %. Nach Abdestillation der flüchtigen Verbindungen erhält man eine farblose, klare Flüssigkeit.

### Beispiel 9:

Umsetzung von Fluowet EA 600 (Firma Clariant) mit dem endständigen Si-H-funktionellen Polysiloxan (D ≈ 8, M'= 2) unter Verwendung eines Bor-haltigen Katalysators:

77,44 g Fluowet EA 600 werden in einem Vierhalskolben, ausgestattet mit Rührer, Intensivkühler, Thermometer und Tropftrichter, zusammen mit 0,108 g Tris(pentafluortriphenyl)boran als Katalysator und 30 g Toluol in inerter Atmosphäre auf 90 °C aufgeheizt. Bei Erreichen der Temperatur werden 72,45 g mittelständiges Si-H-funktionalisiertes Polysiloxan (D = 8, M' = 2) der allgemeinen Formel HMe₂SiO(SiMe₂O)₈SiMe₂H (SiH-Wert: 0,296 %) innerhalb von 15 min zugetropft. Nach beendeter Zugabe und Abkühlen lag der Umsatz, entsprechend der SiH-Methode bei 100 %. Nach Abdestillation der flüchtigen Verbindungen erhält man eine farblose, leicht trübe Flüssigkeit.

Einen Überblick über die ausgeführten und allgemeinen Ausführungsbeispiele gibt die nachfolgende Tabelle:

**Tabelle:**

| **Wasserstoffsiloxan** | **Polyether/ Alkohol** | **Verfahren *** | **Katalysator*** | **Katalysatormenge** | **Reaktionstemperatur** | **Dauer** |
|---|---|---|---|---|---|---|
| M'-O-D₁₃-M' | mit Butylalkohol gestarteter, rein PO-haltiger PE | C und A | [1109-15-5] allein oder im Gemisch mit [109-63-7], [960-71-4] | 0,11-0,5 Mol-% Bor bezogen auf SiH | 90-102 °C | 25 min bis 30 min |
| M'-O-D₁₃-M' | mit Butylalkohol gestarteter, rein PO-haltiger PE | A | [144026-79-9] | 0,15 Mol-% Scandium bezogen auf SiH | 90-95 °C | 30 min |
| M'-O-D₁₃-M' | mit Butylalkohol gestarteter, rein PO-haltiger PE | A | [144026-79-9] im Gemisch mit [1109-15-5] | 0,075 Mol-% Scandium, 0,075 Mol-% Bor, jeweils bezogen auf SiH | 90-95 °C | 30 min |
| M'-O-D₁₃-M' | Ethanol | A | [1109-15-5] | 0,15 Mol-% Bor bezogen auf SiH | 70 °C | 210 min |
| M-Q-D'₅-D₂₂-M | mit Allylalkohol gestarteter, gemischt EO-/PO-haltiger PE | C | [1109-15-5] | 0,5 Mol-% Bor bezogen auf SiH | 60-130 °C | 240 min |
| M'-O-Dₓ-M' M-O-D'ₓ-D_{y}-M M'-O-D'ₓ-D_{y}-M' | einfacher Alkohol, Butyl- o. Allylgestarteter reiner o. gemischter EO/PO-Polyether | A, B o. C | Elementverbindungen der III. Haupt- und 3. Nebengruppe (im Speziellen siehe*) | 0,005 Mol-% 1 Mol-% Bor bezogen auf SiH | 60-130 °C | 10 min - 300 min |

| | | | | | | |
|---|---|---|---|---|---|---|
| *) siehe Versuchsbeschreibung allgemeiner Teil | | | | | | |

## Patentansprüche

1. Verfahren zur Umsetzung von -Si(H)-Einheiten enthaltenden Polyorganosiloxanen der allgemeinen Formel (I) 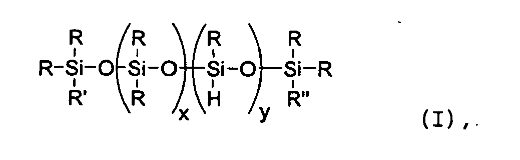 in denem mindestens ein Wasserstoffatom an ein Siliciumatom gebunden ist;
R einen oder mehrere gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen, darstellt;
R' und R'' unabhängig voneinander H oder R darstellt;
x eine ganze Zahl von 0 bis 300 und
y unabhängig davon eine ganze Zahl von 0 bis 100 darstellt;
mit wenigstens einem Alkohol, der ausgewählt ist aus der Gruppe der linearen oder verzweigten, gesättigten, ein- oder mehrfach ungesättigten, aromatischen, aliphatisch-aromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen sowie deren Gemischen, **dadurch gekennzeichnet, dass** man in einem Verfahrensschritt unter Einsatz einer oder mehrerer Elementverbindungen der III. Haupt- und/oder der 3. Nebengruppe als Katalysator in den Si(H)(R)-O-Einheiten des Polyorganosiloxans vorhandene Wasserstoffatome teilweise oder vollständig durch Alkoholatreste der eingesetzten Alkohole ersetzt.

2. Verfahren gemäß Patentanspruch 1, **dadurch gekennzeichnet, dass** man als Elementverbindungen der III. Hauptgruppe einen borhaltigen und/oder aluminiumhaltigen Katalysator und/oder als Elementverbindungen der 3. Nebengruppe einen scandiumhaltigen, yttriumhaltigen, lanthanhaltigen und/oder lanthanoidhaltigen Katalysator einsetzt.

3. Verfahren gemäß Patentanspruch 1 oder 2, **dadurch gekennzeichnet, dass** man als Elementverbindungen der III Haupt- und/oder 3. Nebengruppe Halogenide, Alkylverbindungen, fluorhaltige, cycloaliphatische und/oder heterocyclische Verbindungen einsetzt.

4. Verfahren gemäß Patentanspruch 2 oder 3, **dadurch gekennzeichnet, dass** man einen Katalysator einsetzt, der ausgewählt ist aus der Gruppe:
(C₅F₄)(C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF₃)]₃B; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 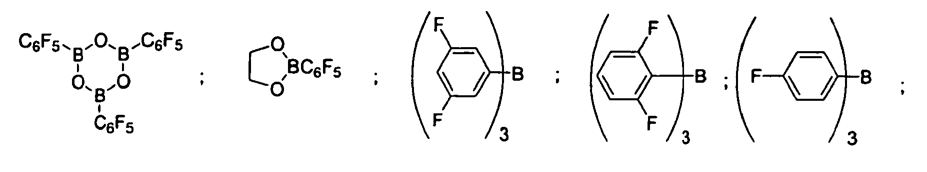 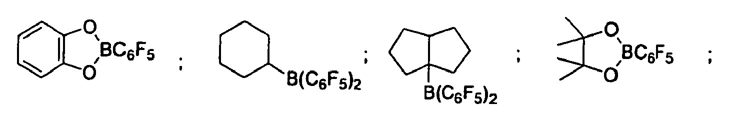 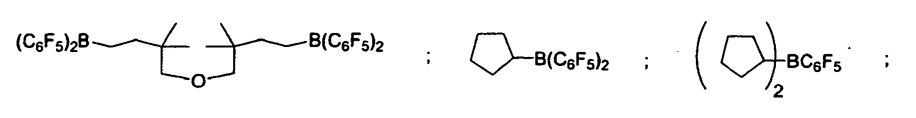 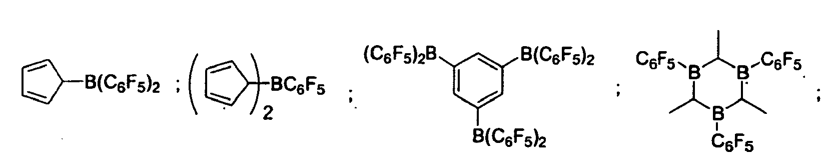 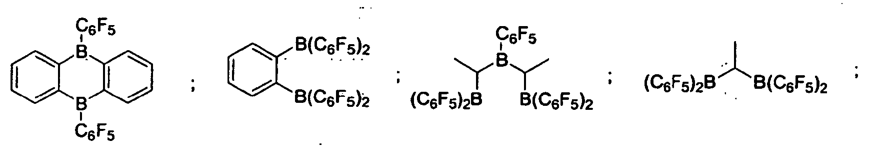 insbesondere Tris(Perfluortriphenylboran), Bortrifluorid-Etherat, Boran-Triphenylphosphinkomplex, Triphenylboran, Triethylboran und Bortrichlorid, Tris(pentafluorophenyl)-Boroxin (9Cl), 4,4,5,5,-Tetramethyl-2-(pentafluorophenyl)-1,3,2-Dioxaborolane (9Cl), 2-(Pentafluorophenyl)-1,3,2-Dioxaborolane (9Cl), Bis(pentafluorophenyl)cyclohexylboran, Di-2,4-cyclopentadien-1-yl-(pentafluorophenyl)boran (9Cl), (Hexahydro-3a(1H)-pentalenyl)bis(pentafluorophenyl)boran (9Cl), 1,3-[2-[Bis(pentafluorophenyl)boryl]ethyl]tetramethyldisiloxan, 2,4,6-Tris(pentafluorophenyl)borazin (7Cl, 8Cl, 9Cl), 1,2-Dihydro-2-(pentafluorophenyl)-1,2-azaborin (9Cl), 2-(Pentafluorophenyl)-1,3,2-benzodioxaborol (9Cl), Tris(4-trifluoromethoxyphenyl)boran, Tris(3-trifluoromethylphenyl) boran, Tris(4-fluorophenyl)boran, Tris(2,6-difluorophenyl-)boran, Tris(3,5-difluorophenyl)boran, Methyliumtriphenyltetrakis(pentafluorophenyl)borat, N,N-Dimethylaniliniumtetrakis(pentyfluorophenyl)borat sowie deren Gemische.

5. Verfahren gemäß Patentanspruch 2 oder 3, **dadurch gekennzeichnet, dass** man einen Katalysator einsetzt, der ausgewählt ist aus der Gruppe:
AlCl₃, Aluminiumacetylacetonat, AlF₃, Aluminiumtrifluormethansulfonat, Di-i-Butylaluminiumchlorid, Di-i-Butylaluminiumhydrid, Triethylaluminium sowie deren Gemische.

6. Verfahren gemäß Patentanspruch 2 oder 3, **dadurch gekennzeichnet, dass** man einen Katalysator einsetzt, der ausgewählt ist aus der Gruppe:
Scandium(III)chlorid, Scandium(III)fluorid, Scandium-(III)hexafluoroacetylacetonat, Scandium(III)trifluormethansulfonat, Tris(cyclopentadienyl)scandium sowie deren Gemische.

7. Verfahren gemäß Patentanspruch 2 oder 3, **dadurch gekennzeichnet, dass** man einen Katalysator einsetzt, der ausgewählt ist aus der Gruppe:
Tris(cyclopentadienyl)yttrium, Yttrium(III)chlorid, Yttrium(III)fluorid, Yttrium(III)hexafluoroacetylacetonat, Yttrium(III)naphthenat sowie deren Gemische.

8. Verfahren gemäß Patentanspruch 2 oder 3, **dadurch gekennzeichnet, dass** man einen Katalysator einsetzt, der ausgewählt ist aus der Gruppe:
Lanthan(III)chlorid, Lanthan(III)fluorid, Lanthan(III)iodid, Lanthan(III)trifluormethansulfonat, Tris(cyclopentadienyl)lanthan sowie deren Gemische.

9. Verfahren gemäß Patentanspruch 2 oder 3, **dadurch gekennzeichnet, dass** man einen Katalysator einsetzt, der ausgewählt ist aus der Gruppe:
Cer(III)bromid, Cer(III)chlorid, Cer(III)fluorid, Cer-(IV) fluorid, Cer(III) trifluoracetylacetonat, Tris(cyclopentadienyl)cer, Europium(III) fluorid, Europium (III) chlorid, Praesodym(III) hexafluoroacetylacetonat, Praesodym-(III)fluorid, Praesodym(III)trifluoracetylacetonat, Samarium(III)chlorid, Samarium(III)fluorid, Samarium(III)naphthenat, Samarium(III)trifluoracetylacetonat, Ytterbium(III)fluorid, Ytterbium(III)trifluormethansulfonat, Tris(cyclopentadienyl)ytterbium sowie deren Gemische.

10. Verfahren gemäß einem der Patentansprüche 1 bis 9, **dadurch gekennzeichnet, dass** man einen Alkohol einsetzt, der ausgewählt ist aus der Gruppe: Methanol, Ethanol, fluorierte Alkohole, Butylpolyetheralkohole, AllyIpolyetheralkohole oder Nonylphenolpolyetheralkohole, ethylenoxidhaltige und/oder propylenoxidhaltige und/oder styroloxidhaltige und/oder butylenoxidhaltige Polyetheralkohole, Aminoalkohole sowie deren Gemische.

11. Verfahren gemäß einem der Patentansprüche 1 bis 10, **dadurch gekennzeichnet, dass** man ein Stoffmengenverhältnis von SiH-Gruppen zu Alkoholgruppen im Bereich von 1 : 1,0 bis 1 : 3,0 Moläquivalenten einstellt.

12. Verfahren gemäß einem der Patentansprüche 1 bis 11, **dadurch gekennzeichnet, dass** man ein Stoffmengenverhältnis von SiH-Gruppen zu Alkoholgruppen im Bereich von 1 : 0,1 bis 1 : 0,99 Moläquivalenten einstellt.

13. Verfahren gemäß einem der Patentansprüche 1 bis 12, **dadurch gekennzeichnet, dass** man ein Polyorganosiloxan einsetzt, das ausgewählt ist aus endständigen, seitenständigen oder gemischtständigen Polyorganosiloxanen.

14. Verfahren gemäß einem der Patentansprüche 1 bis 13, **dadurch gekennzeichnet, dass** man Polyorganosiloxane einsetzt, die ausgewählt sind aus der Gruppe der kammartigen, α,ω-disubstituierten und gemischten Polydimethyl-Wasserstoffsiloxanen der allgemeinen Formel (I).

15. Verfahren gemäß Patentanspruch 13, **dadurch gekennzeichnet, dass** man Polyorganosiloxane einsetzt, die ausgewählt sind aus der Gruppe der allgemeinen Formel (II):
M-O-Dₓ-D'_{y}-M (II)
wobei
M für Trialkylsilyl, insbesondere Trimethylsilyl steht,
Dₓ für (Dialkylsilyloxy)ₓ, insbesondere (Dimethylsilyloxy)ₓ steht und
D'_{y} für 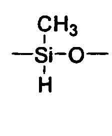 steht, wobei y eine ganze Zahl bis 100 darstellt.

16. Verfahren gemäß Patentanspruch 13, **dadurch gekennzeichnet, dass** man Polyorganosiloxane einsetzt, die ausgewählt sind aus der Gruppe der allgemeinen Formel (III):
M'-O-Dₓ-M' (III)
wobei
M' für Dialkyl(hydrogen)silyl, insbesondere Dimethylhydrogensilyl steht und
Dₓ für (Dialkylsilyloxy)ₓ, insbesondere (Dimethylsilyloxy)ₓ steht.

17. Verfahren gemäß Patentanspruch 13, **dadurch gekennzeichnet, dass** man Polyorganosiloxane einsetzt, die ausgewählt sind aus der Gruppe der allgemeinen Formel (IV):
M'-O-Dₓ-D'_{y}-M' (IV)
wobei
M' für Dialkyl(hydrogen)silyl, insbesondere Dimethylhydrogensilyl steht,
Dₓ für (Dialkylsilyloxy)ₓ, insbesondere (Dimethylsilyloxy)ₓ steht und
D'_{y} für 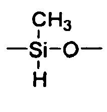 steht.

18. Verfahren gemäß einem der Patentansprüche 1 bis 17, **dadurch gekennzeichnet, dass** man die Umsetzung lösungsmittelfrei durchführt.

## Claims

1. Process for reacting polyorganosiloxanes which contain -Si(H) units and have the formula (I) 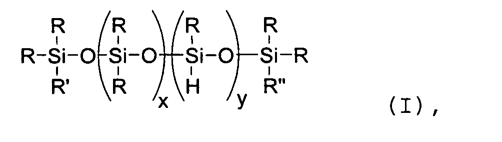 in which at least one hydrogen atom is bound to a silicon atom;
R represents one or more identical or different radicals selected from among linear or branched, saturated, monounsaturated or polyunsaturated alkyl, aryl, alkaryl and aralkyl radicals having from 1 to 20, in particular from 1 to 10, carbon atoms, haloalkyl groups having from 1 to 20 carbon atoms, siloxy groups and triorganosiloxy groups;
R' and R" are each, independently of one another, H or R;
x is an integer from 0 to 300 and
y is, independently of x, an integer from 0 to 100;
with at least one alcohol selected from the group consisting of linear or branched, saturated, monounsaturated or polyunsaturated, aromatic or aliphatic-aromatic monoalcohols and polyalcohols, polyether monoalcohols and polyether polyalcohols, aminoalcohols, in particular N-alkyl-, arylamino-EO-, -PO alcohols, N-alkyl or arylamino alcohols and mixtures thereof, **characterized in that** hydrogen atoms present in the Si(H)(R)-O units of the polyorganosiloxane are partly or completely replaced by alkoxide groups derived from the respective alcohols in a process step using one or more compounds of elements of main group III and/or transition group III as catalyst.

2. Process according to Claim 1, **characterized in that** a boron-containing and/or aluminium-containing catalyst is used as compound(s) of elements of main group III and/or a scandium-containing, yttrium-containing, lanthanum-containing and/or lanthanide-containing catalyst is used as compound(s) of elements of transition group III.

3. Process according to Claim 1 or 2, **characterized in that** halides, alkyl compounds, fluorine-containing, cycloaliphatic and/or heterocyclic compounds are used as compounds of elements of main group III and/or transition group III.

4. Process according to Claim 2 or 3, **characterized in that** the catalyst used is selected from the group consisting of:
(C₅F₄)(C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF₃)]₃B; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅) (C₆F₅)₂B-CH₂CH₂Si(CH₃)₃; 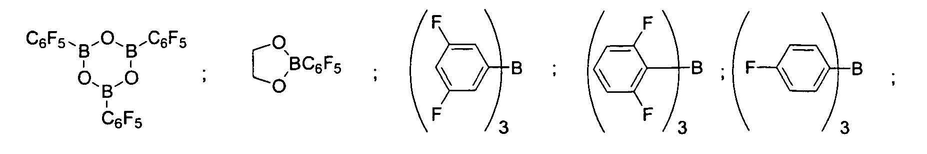 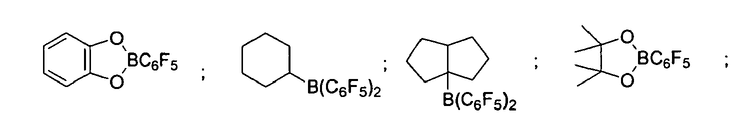 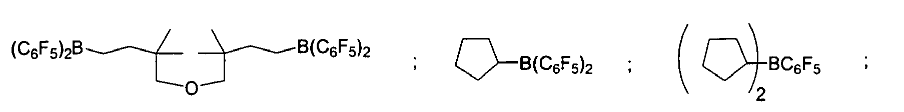 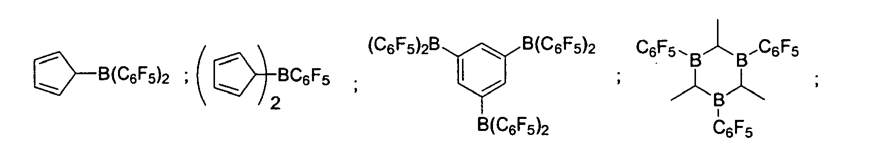 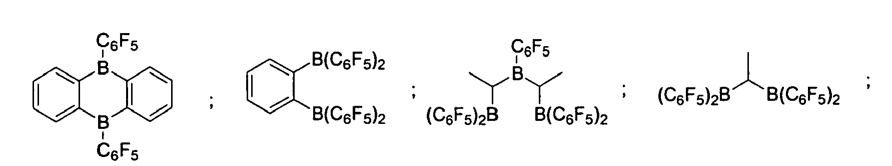 in particular tris(perfluorotriphenylborane), boron trifluoride etherate, the boranetriphenylphosphine complex, triphenylborane, triethylborane and boron trichloride, tris(pentafluorophenyl)boroxin (9Cl), 4,4,5,5-tetramethyl-2-(pentafluorophenyl)-1,3,2-dioxaborolane (9Cl), 2-(pentafluorophenyl)-1,3,2-dioxaborolane (9Cl), bis(pentafluorophenyl)cyclohexylborane, di-2,4-cyclopentadien-1-yl(pentafluorophenyl)borane (9Cl), (hexahydro-3a(1H)-pentalenyl)bis(pentafluorophenyl)borane (9Cl), 1,3-[2-[bis(pentafluorophenyl)boryl]ethyl]tetramethyldisiloxane, 2,4,6-tris(pentafluorophenyl)borazine (7Cl, 8Cl, 9Cl), 1,2-dihydro-2-(pentafluorophenyl)-1,2-azaborine (9Cl), 2-(pentafluorophenyl)-1,3,2-benzodioxaborole (9Cl), tris(4-trifluoromethoxyphenyl)borane, tris(3-trifluoromethylphenyl)borane, tris(4-fluorophenyl)borane, tris-(2,6-difluorophenyl)borane, tris(3,5-difluorophenyl)borane, methylium triphenyltetrakis(pentafluorophenyl)borate, N,N-dimethylanilinium tetrakis(pentafluorophenyl)borate and mixtures thereof.

5. Process according to Claim 2 or 3, **characterized in that** the catalyst used is selected from the group consisting of:
AlCl₃, aluminium acetylacetonate, AlF₃, aluminium trifluoromethanesulphonate, di-i-butylaluminium chloride, di-i-butylaluminium hydride, triethylaluminium and mixtures thereof.

6. Process according to Claim 2 or 3, **characterized in that** the catalyst used is selected from the group consisting of:
scandium(III) chloride, scandium(III) fluoride, scandium(III) hexafluoroacetylacetonate, scandium(III) trifluoromethanesulphonate, tris(cyclopentadienyl)scandium and mixtures thereof.

7. Process according to Claim 2 or 3, **characterized in that** the catalyst used is selected from the group consisting of:
tris(cyclopentadienyl)yttrium, yttrium(III) chloride, yttrium(III) fluoride, yttrium(III) hexafluoroacetylacetonate, yttrium(III) naphthenate and mixtures thereof.

8. Process according to Claim 2 or 3, **characterized in that** the catalyst used is selected from the group consisting of:
lanthanum (III) chloride, lanthanum(III) fluoride, lanthanum(III) iodide, lanthanum(III) trifluoromethanesulphonate, tris(cyclopentadienyl)lanthanum and mixtures thereof.

9. Process according to Claim 2 or 3, **characterized in that** the catalyst used is selected from the group consisting of:
cerium(III) bromide, cerium(III) chloride, cerium(III) fluoride, cerium(IV) fluoride, cerium(III) trifluoroacetylacetonate, tris(cyclopentadienyl)cerium, europium(III) fluoride, europium(III) chloride, praesodymium(III) hexafluoroacetylacetonate, praesodymium(III) fluoride, praesodymium(III) trifluoroacetylacetonate, samarium(III) chloride, samarium(III) fluoride, samarium(III) naphthenate, samarium(III) trifluoroacetylacetonate, ytterbium(III) fluoride, ytterbium(III) trifluoromethanesulphonate, tris(cyclopentadienyl)ytterbium and mixtures thereof.

10. Process according to one of Claims 1 to 9, **characterized in that** the alcohol used is selected from the group consisting of: methanol, ethanol, fluorinated alcohols, butyl polyether alcohols, allyl polyether alcohols or nonylphenol polyether alcohols, polyether alcohols containing ethylene oxide and/or propylene oxide and/or styrene oxide and/or butylene oxide, amino alcohols and mixtures thereof.

11. Process according to one of Claims 1 to 10, **characterized in that** the molar ratio of SiH groups to alcohol groups is set to a value in the range from 1:1.0 to 1:3.0.

12. Process according to one of Claims 1 to 11, **characterized in that** the molar ratio of SiH groups to alcohol groups is set to a value in the range from 1:0.1 to 1:0.99.

13. Process according to one of Claims 1 to 12, **characterized in that** the polyorganosiloxane used is selected from among terminal, lateral or mixed-structure polyorganosiloxanes.

14. Process according to one of Claims 1 to 13, **characterized in that** the polyorganosiloxanes used are selected from the group consisting of comb-like, α,ω-disubstituted and mixed polydimethylhydrogensiloxanes of the formula (I).

15. Process according to Claim 13, **characterized in that** the polyorganosiloxanes used are selected from the group of the formula (II):
M-O-Dₓ-D'_{y}-M (II)
where
M is trialkylsilyl, , in particular trimethylsilyl,
Dₓ is (dialkylsilyloxy)ₓ, in particular (dimethylsilyloxy)ₓ, and
D'_{y} is 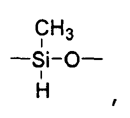 where y is an integer up to 100.

16. Process according to Claim 13, **characterized in that** the polyorganosiloxanes used are selected from the group of the formula (III):
M'-O-Dₓ-M' (III)
where
M' is dialkyl(hydrogen)silyl, in particular dimethylhydrogensilyl, and
Dₓ is (dialkylsilyloxy)ₓ, in particular (dimethylsilyloxy)ₓ.

17. Process according to Claim 13, **characterized in that** the polyorganosiloxanes used are selected from the group of the formula (IV):
M'-O-Dₓ-D'_{y}-M' (IV)
where
M' is dialkyl(hydrogen)silyl, in particular dimethylhydrogensilyl,
Dₓ is (dialkylsilyloxy)ₓ, in particular (dimethylsilyloxy)ₓ, and
D'_{y} is

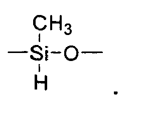

18. Process according to one of Claims 1 to 17, **characterized in that** the reaction is carried out in the absence of solvents.

## Revendications

1. Procédé pour transformer des polyorganosiloxanes contenant des unités -Si(H) de formule générale (I) 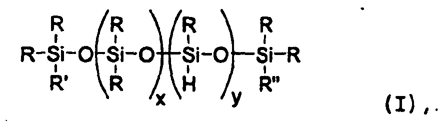 dans laquelle au moins un atome d'hydrogène est lié à un atome de silicium ;
R représente un ou plusieurs radicaux identiques ou différents, choisis parmi les radicaux alkyle, aryle, alkaryle ou aralkyle linéaires ou ramifiés, saturés, monoinsaturés ou polyinsaturés, comprenant 1 à 20, en particulier 1 à 10 atomes de carbone, les groupes halogénoalkyle comprenant 1 à 20 atomes de carbone, les groupes siloxy et les groupes triorganosiloxy ;
R' et R" représentent, indépendamment l'un de l'autre, H ou R ;
x représente un nombre entier de 0 à 300 et
y représente indépendamment un nombre entier de 0 à 100 ;
avec au moins un alcool, choisi dans le groupe des monoalcools ou polyalcools, polyéthermonoalcools ou polyétherpolyalcools, aminoalcools linéaires ou ramifiés, saturés, monoinsaturés ou polyinsaturés, aromatiques, aliphatiques-aromatiques, en particulier les N-alkyl-OE-alcools, les N-alkyl-OP-alcools, les arylamino-OE-alcools, les arylamino-OP-alcools, les N-alkylaminoalcools ou les arylaminoalcools ainsi que leurs mélanges, **caractérisé en ce qu'**on remplace, dans une étape de procédé, avec utilisation d'un ou de plusieurs composés d'éléments du 3ème groupe principal et/ou du 3ème groupe secondaire comme catalyseur, dans les unités Si(H)(R)-O du polyorganosiloxane, les atomes d'hydrogène présents, partiellement ou complètement, par des radicaux alcoolate des alcools utilisés.

2. Procédé selon la revendication 1, **caractérisé en ce qu'**on utilise comme composés d'éléments du 3ème groupe principal un catalyseur contenant du bore et/ou de l'aluminium et/ou comme composés d'éléments du 3ème groupe secondaire un catalyseur contenant du scandium, de l'yttrium, du lanthane et/ou un lanthanide.

3. Procédé selon la revendication 1 ou 2, **caractérisé en ce qu'**on utilise comme composés d'éléments du 3ème groupe principal et/ou du 3ème groupe secondaire des halogénures, des composés alkyle, des composés contenant du fluor, cycloaliphatiques et/ou hétérocycliques.

4. Procédé selon la revendication 2 ou 3, **caractérisé en ce qu'**on utilise un catalyseur choisi dans le groupe:
(C₅F₄)(C₆F₅)₂B ; (C₅F₄)₃B ; (C₆F₅)BF₂ ; BF(C₆F₅)₂ ; B(C₆F₅)₃ ; BCl₂(C₆F₅) ; BCl(C₆F₅)₂ ; B(C₆H₅)(C₆F₅)₂ ; B(Ph)₂(C₆F₅) ; [C₆H₄(mCF₃)]₃B ; [C₆H₄(pOCF₃)]₃B ; (C₆F₅)B(OH)₂ ; (C₆F₅)₂BOH ; (C₆F₅)₂BH; (C₆F₅)BH₂ ; (C₇H₁₁)B(C₆F₅)₂ ; (C₈H₁₄B)(C₆F₅) ; (C₆F₅)₂B(OC₂H₅) ; (C₆F₅)₂B-CH₂CH₂Si(CH₃)₃ ; 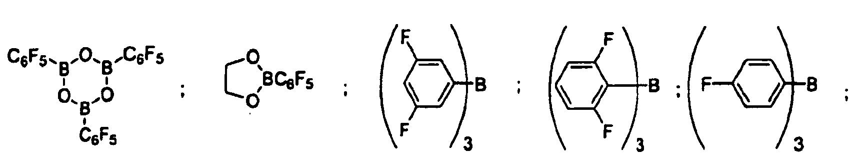 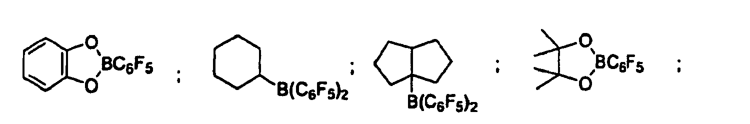 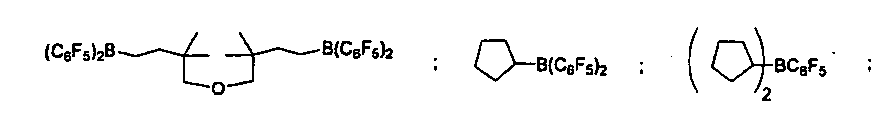 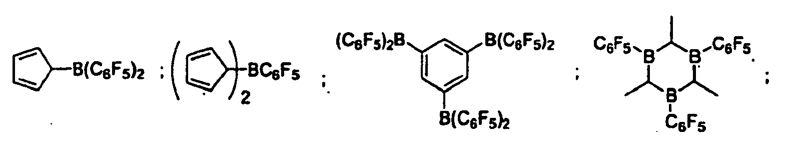 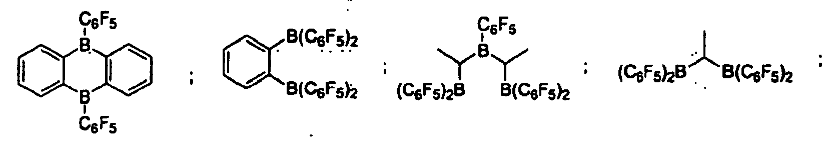 en particulier le tris(perfluorotriphénylborane), l'éthérate de trifluorure de bore, le complexe boranetriphénylphosphine, le triphénylborane, le triéthylborane et le trichlorure de bore, la tris(pentafluorophényl)-boroxine (9Cl), le 4,4,5,5-tétraméthyl-2-(pentafluorophényl)-1,3,2-dioxaborolane (9Cl), le 2-(pentafluorophényl)-1,3,2-dioxaborolane (9Cl), le bis(pentafluorophényl)cyclohexylborane, le di-2,4-cyclopentadién-1-yl-(pentafluorophényl)borane (9Cl), l'(hexahydro-3a(1H)-pentalényl)bis(pentafluorophényl)borane (9Cl), le 1,3-[2-[bis(pentafluorophényl)boryl]éthyl]tétraméthyldisiloxane, la 2,4,6-tris(pentafluorophényl)borazine (7Cl, 8Cl, 9Cl), la 1,2-dihydro-2-(pentafluorophényl)-1,2-azaborine (9Cl), le 2-(pentafluorophényl)-1,3,2-benzodioxaborol (9Cl), le tris(4-trifluorométhoxyphényl)borane, le tris(3-trifluorométhylphényl)borane, le tris(4-fluorophényl)borane, le tris(2,6-difluorophényl)borane, le tris(3,5-difluorophényl)borane, le triphényltétrakis(pentafluorophényl)borate de méthylium, le tétrakis(pentafluorophényl)borate de N,N-diméthylanilinium ainsi que leurs mélanges.

5. Procédé selon la revendication 2 ou 3, **caractérisé en ce qu'**on utilise un catalyseur choisi dans le groupe :
AlCl₃, acétylacétonate d'aluminium, AlF₃, trifluorométhanesulfonate d'aluminium, chlorure de di-i-butylaluminium, hydrure de di-i-butylaluminium, triéthylaluminium ainsi que leurs mélanges.

6. Procédé selon la revendication 2 ou 3, **caractérisé en ce qu'**on utilise un catalyseur choisi dans le groupe:
chlorure de scandium (III), fluorure de scandium (III), hexafluoroacétylacétonate de scandium (III), trifluorométhanesulfonate de scandium (III), tris(cyclopentadiényl)scandium ainsi que leurs mélanges.

7. Procédé selon la revendication 2 ou 3, **caractérisé en ce qu'**on utilise un catalyseur qui est choisi dans le groupe :
tris(cyclopentadiényl)yttrium, chlorure d'yttrium (III), fluorure d'yttrium (III), hexafluoroacétylacétonate d'yttrium (III), naphténate d'yttrium (III) ainsi que leurs mélanges.

8. Procédé selon la revendication 2 ou 3, **caractérisé en ce qu'**on utilise un catalyseur qui est choisi dans le groupe :
chlorure de lanthane (III), fluorure de lanthane (III), iodure de lanthane (III), trifluorométhanesulfonate de lanthane (III), tris(cyclopentadiényl)lanthane ainsi que leurs mélanges.

9. Procédé selon la revendication 2 ou 3, **caractérisé en ce qu'**on utilise un catalyseur qui est choisi dans le groupe :
bromure de cérium (III), chlorure de cérium (III), fluorure de cérium (III), fluorure de cérium (IV), trifluoroacétylacétonate de cérium (III), tris(cyclopentadiényl)cérium, fluorure d'europium (III), chlorure d'europium (III), hexafluoroacétylacétonate de praséodyme (III), fluorure de praséodyme (III), trifluoroacétylacétonate de praséodyme (III), chlorure de samarium (III), fluorure de samarium (III), naphténate de samarium (III), trifluoroacétylacétonate de samarium (III), fluorure d'ytterbium (III), trifluorométhanesulfonate d'ytterbium (III), tris(cyclopentadiényl)ytterbium ainsi que leurs mélanges.

10. Procédé selon l'une quelconque des revendications 1 à 9, **caractérisé en ce qu'**on utilise un alcool qui est choisi dans le groupe :
méthanol, éthanol, alcools fluorés, butylpolyétheralcools, allylpolyétheralcools ou nonylphénolpolyétheralcools, polyétheralcools contenant de l'oxyde d'éthylène et/ou de l'oxyde de propylène et/ou de l'oxyde de styrène et/ou de l'oxyde de butylène, aminoalcools ainsi que leurs mélanges.

11. Procédé selon l'une quelconque des revendications 1 à 10, **caractérisé en ce qu'**on règle un rapport de quantités des groupes SiH aux groupes alcool dans la plage de 1 : 1,0 à 1 : 3,0 équivalents en mole.

12. Procédé selon l'une quelconque des revendications 1 à 11, **caractérisé en ce qu'**on règle un rapport de quantités de groupes SiH aux groupes alcool dans la plage de 1: 0,1 à 1: 0,99 équivalent en mole.

13. Procédé selon l'une quelconque des revendications 1 à 12, **caractérisé en ce qu'**on utilise un polyorganosiloxane qui est choisi parmi les polyorganosiloxanes en position terminale, latérale ou mixte.

14. Procédé selon l'une quelconque des revendications 1 à 13, **caractérisé en ce qu'**on utilise des polyorganosiloxanes qui sont choisis dans le groupe des polydiméthylhydrogénosiloxanes en peigne, α,ω-disubstitués et mixtes de formule générale (I).

15. Procédé selon la revendication 13, **caractérisé en ce qu'**on utilise des polyorganosiloxanes qui sont choisis dans le groupe de formule générale (II) :
M-O-Dₓ-D'_{y}-M (II)
où
M représente trialkylsilyle, en particulier triméthylsilyle,
Dₓ représente (dialkylsilyloxy)ₓ, en particulier (diméthylsilyloxy)ₓ, et
D'_{y} représente 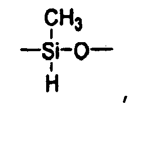 y étant un nombre entier jusqu'à 100.

16. Procédé selon la revendication 13, **caractérisé en ce qu'**on utilise des polyorganosiloxanes qui sont choisis dans le groupe de formule générale (III) :
M'-O-Dₓ-M' (III)
où
M' représente dialkyl(hydrogéno)silyle, en particulier diméthylhydrogénosilyle et
Dₓ représente (dialkylsilyloxy)ₓ, en particulier (diméthylsilyloxy)ₓ.

17. Procédé selon la revendication 13, **caractérisé en ce qu'**on utilise des polyorganosiloxanes qui sont choisis dans le groupe de formule générale (IV) :
M'-O-Dₓ-D'_{y}-M' (IV)
où
M' représente dialkyl(hydrogéno)silyle, en particulier diméthylhydrogénosilyle,
Dₓ représente (dialkylsilyloxy)ₓ, en particulier (diméthylsilyloxy)ₓ et
D_{y}' représente

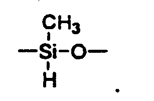

18. Procédé selon l'une quelconque des revendications 1 à 17, **caractérisé en ce qu'**on réalise la transformation en l'absence de solvant.
